# EUROPEAN PATENT SPECIFICATION

(11) **EP 4 169 388 B1**
(45) Date of publication and mention of the grant of the patent: **08.01.2025**
(21) Application number: 20941311.1
(22) Date of filing: 18.06.2020
(51) Int. Cl.: A23L 3/015, A23L 2/02, A23F 3/00, A23F 5/00, F16J 12/00, A23F 5/24, A23F 5/26, A23L 2/42, A23L 2/72

(54) **METHOD FOR PREPARING BEVERAGES BY EXTRACTION EMPLOYING HIGH-PRESSURE PROCESSING (HPP)**
VERFAHREN ZUR HERSTELLUNG VON GETRÄNKEN DURCH EXTRAKTION MITTELS HOCHDRUCKVERARBEITUNG (HPP)
PROCÉDÉ POUR PRÉPARER DES BOISSONS PAR EXTRACTION UTILISANT LE PROCÉDÉ À HAUTE PRESSION (PHP)

(43) Date of publication of application: 26.04.2023
(73) Proprietor: Hiperbaric, S.A.U., 09001 Burgos (ES)
(72) Inventor: HERNANDO SAIZ, Andrés, 09001 Burgos (ES); TONELLO SAMSON, Carole, 09001 Burgos (ES); GONZÁLEZ-ANGULO, Mario, 09001 Burgos (ES); QUEIRÓS, Rui P, 09001 Burgos (ES)
(74) Representative: Herrero & Asociados, S.L.
(86) International application number: PCT/ES2020/070396
(87) International publication number: WO 2021/255300

(56) References cited:
- EP-A1- 3 680 517
- WO-A1-2019/048716
- WO-A1-2019/048716
- CN-A- 101 810 231
- KR-A- 20190 115 943
- DE ANCOS BEGOÑA ET AL: "Effect of high-pressure processing applied as pretreatment on carotenoids, flavonoids and vitamin C in juice of the sweet oranges 'Navel' and the red-fleshed 'Cara Cara'", FOOD RESEARCH INTERNATIONAL, ELSEVIER, AMSTERDAM, NL, vol. 132, 19 February 2020 (2020-02-19), XP086142849, ISSN: 0963-9969, [retrieved on 20200219], DOI: 10.1016/J.FOODRES.2020.109105
- JUN ET AL: "Caffeine extraction from green tea leaves assisted by high pressure processing", JOURNAL OF FOOD ENGINEERING, ELSEVIER, AMSTERDAM, NL, vol. 94, no. 1, September 2009 (2009-09-01), pages 105 - 109, XP026094297, ISSN: 0260-8774, [retrieved on 20090311], DOI: 10.1016/J.JFOODENG.2009.03.003

## Description

### OBJECT OF THE INVENTION

The object of the present invention is to provide a method for producing ready-to-drink beverages by extraction/infusion using high hydrostatic pressure, also known as High Pressure Processing (HPP), to increase the solid-liquid extraction rate at the same time that microorganisms are inactivated, to obtain an enriched, safe and ready to drink product (beverage) with an extended shelf-life.

### BACKGROUND OF THE INVENTION

Producing beverages by using solid-liquid extraction is usually a time-consuming process (especially when it is performed in cold conditions). In solid-liquid extractions, the two phases are in contact and some compounds diffuse from the solid to the liquid phase. The liquid phase is generally water. Some examples of said solids are: microorganisms (bacteria, yeasts or molds) commonly used for the fermentation of beverages (such as beer); algae, potentially used for the production of enriched beverages; or plant-based material, typically used for the production of infused beverages (such as tea or coffee).

In order to produce said solid-liquid extraction beverages (cold brewing techniques), commonly, the two phases are placed in contact at cold or room temperature for long periods of time (several hours), leading to a low extraction rate and/or yield, and a very time-consuming process.

Alternatively, heat can be used to increase the rate of said extraction, however, the temperature increase of the beverage may damage and/or destroy compounds of interest, thus, affecting the flavor and/or the nutritional properties of the beverage.

The extraction of compounds of interest can be performed on microorganisms, commonly used for the fermentation of several beverages (e.g. beer, wine, kombucha, kefir, etc.). Said microorganisms are a rich source of bioactive/nutritional compounds that are present inside their cells. These microorganisms are usually filtered from said beverages (during the production process). Posteriorly, a recovery process may be applied using several distinct methods to obtain compounds of interest (as a way to value a byproduct), to be used as additives for other applications. Thus, these compounds are usually not used for the enrichment of the drink itself due to the extra processing steps required (filtration, extraction and posterior supplementation) and are instead removed, missing the opportunity to enrich that drink.

Another scenario is the extraction of compounds that can be performed on plant-based material (e.g. leaves, flowers, seeds, fruits or vegetables), typically used for the production of infused beverages, such as tea or coffee. Broadly, an infusion is the process of extracting the chemical compounds responsible for the flavor from plant-based material into a liquid solvent, which is usually water although not limited to it. Typically, this extraction process is performed with heat (traditional tea or coffee brew).

However, the cold extraction of compounds from plant-based material, usually known as cold-brewing, has attracted a lot of interest, as it gives a unique flavor profile compared to traditional heat brewing. Nevertheless, cold-brewing takes a long time, making its industrial application more difficult due to the long production times and subsequent space requirements, consequential high costs and low extraction yields.

The use of high pressure processing (HPP), between 100 and 1,000 MPa, can reduce the time of extraction to a few seconds/minutes, increasing extraction yields at cold, room or mild temperature. High pressure promotes the permeabilization of the cell membranes of microorganisms, algae, and plant cells allowing their content (proteins, polysaccharides, antioxidants, vitamins, flavor molecules, etc.) to diffuse to their surrounding media, therefore extracting it to the liquid.

US10306904B1 describes a process to extract coffee in a rigid tank that uses turbulence and flow promoted by a very small increase in pressure, to reduce the extraction time to 45 min. It is noteworthy that the method is distinct from HPP because the pressure level used is very low, just for increasing turbulence in the tank. Furthermore, the resulting coffee would have a short commercial life as the process does not contain any step to inactivate microorganisms in the beverage, before or after bottling. The process comprises the use of filters for preventing backflow or exiting of coffee beans from the tank.

HPP is a non-thermal pasteurization technology already used to process several types of beverages (among other foods) to eliminate spoilage microorganisms and pathogens and therefore, to extend the shelf-life of the final product. Using HPP allows to obtain safe products with minimal impact on flavor and nutrients and with extended shelf-life, generally stored under refrigeration.

Typically, HPP requires products to be in their final package ("in-pack HPP"). To withstand high pressure, said package needs to be flexible, such as plastic bottles in the case of beverages. The flexible package transmits the external hydrostatic pressure to the product. Since the product is processed in its final package the risk of recontamination is avoided.

Other documents such as DE ANCOS BEGOÑA ET AL: "Effect of high-pressure processing applied as pretreatment on carotenoids, flavonoids and vitamin C in juice of the sweet oranges 'Navel' and the red-fleshed 'Cara Cara'",FOOD RESEARCH INTERNATIONAL, ELSEVIER, AMSTERDAM, NL, vol. 132, 19 February 2020 or UN ET AL: "Caffeine extraction from green tea leaves assisted by high pressure processing",JOURNAL OF FOOD ENGINEERING, ELSEVIER, AMSTERDAM, NL, vol. 94, no. 1, September 2009 (2009-09), pages 105-109 discloses HPP methods to extract and decontaminate a mixture of solids and liquids in a flexible bag located outside the HPP processor, the content of the flexible bag being then filtered.

CN101 810 231 discloses a method for extracting tea by subjecting a mixture of water and tea leaves to a combination of ultrasonic treatment and HPP.

CN107927252A describes the use of HPP for the inactivation of microorganisms on infused beverages (tea). In this case, in a first step, tea extraction is made using the traditional cold brewing method (i.e. leaving the tea leaves in contact with water for at least 8 hours). Then the liquid is filtered and bottled, and HPP is used as a final stage of the production method, right after bottling the infused product. Following this method, HPP is used as an in-pack pasteurization technique ("in-pack HPP") to extend shelf-life and guarantee food safety after the multi-step process required for traditional cold brewing. The various stages involved make this beverage production a long-lasting process.

US20180371386A1 describes a method to use HPP, either in-pack or using a direct compression system (the vessel containing the solid and liquid of interest is pressurized using a plunger on a rod that is driven by a hydraulic cylinder), to improve the extraction in liquids containing alcohol. However, subsequent handling of the beverage after extraction would microbiologically contaminate the product and dramatically affect food safety and commercial shelf-life. The method disclosed increases the rate and yield of extraction but it does not describe further steps to ensure the microbiological stability of the beverage during storage after the process. For production, commercialization and consumer acceptance purposes, typical handling of infused beverages requires a filtration stage to remove the solid after extraction. Following the above-described process, this final filtration step would require to open the already high-pressure processed package in which the beverage was bottled or packed. This would expose the product to atmospheric air and recontamination with microorganisms. Furthermore, if the method were to be applied to non- or low-alcoholic liquids (e.g. juices, soft drinks, beer or cider) the resulting product would have a short commercial shelf-life since the preserving effect that alcohol confers would not exist. Therefore, the beverage would need to be subjected to a second step for the inactivation of microorganisms after filtration, if the alcohol content is not high enough to keep the product microbiologically stable.

The high pressure processing of pre-packaged liquids ("in-pack HPP"), that have a predetermined shape, implies more empty-space inside the vessel (gaps generated by the position of packages), leading to a low filling ratio. WO2019048716A1 considers a device that allows the HPP of liquids in-bulk (so called "in-bulk HPP"), using a flexible bag inserted in a high pressure vessel, afterwards connected to an ultraclean (ESL: Extended Shelf Life) or aseptic tank. This solution allows hygienic recovery of a liquid substance in-bulk from a high pressure unit, preventing the recontamination of the product (after HPP) and increasing the filling ratio of the vessel, consequently increasing the productivity and efficiency, and opening the possibility to use any kind of packaging after the process. It is worth to notice that the mentioned innovation contemplates a filter prior to the filling of the said flexible bag, to prevent solids from entering the bag.

Therefore, the prior art using HPP either increases the rate and/or yield of extraction or increases the safety and/or shelf-life of the product. The present invention overcomes the technical limitations of separated operations since extraction and microbial inactivation processes are conducted simultaneously.

### DESCRIPTION OF THE INVENTION

The present invention refers to a method for producing beverages by extraction using High Pressure Processing (HPP). The method is used to produce in-bulk safe beverages and with extended shelf-life containing compounds of interest (nutritional and/or flavoring) extracted from one or several solids. Solids can be plant-based material, algae or microorganisms.

The method of the invention allows performing simultaneously extraction/infusion processes and microbial inactivation by HPP, obtaining in this way, with much quicker extraction time and a higher yield, a ready-to-drink beverage with enriched extracts from the solid, an extended shelf-life (usually under refrigeration).

The method of the present invention uses an "in-bulk HPP" unit, in which a mixture of one or several liquids (main constituent of the final beverage) and one or several solids (from which compounds of interest are extracted) is processed. The ensemble of liquid/s and solid/s is hereinafter referred to as "the mixture".

The unit comprises, among other elements, one or several unprocessed raw material buffer tanks, and a flexible bag that is located inside the high pressure vessel. The bag, that will be furtherly filled with the mixture, is watertight, preventing direct contact between the mixture (inside the bag) and the pressurizing fluid (water or oil or other compressible fluids outside the bag), as well as transmitting high pressure to the mixture.

Thus, the method for producing beverages of the invention comprises a first step consisting in the introduction of the mixture from the unprocessed raw material buffer tank/s, into the flexible bag (housed in the vessel).

The vessel is then filled with a pressurizing fluid, commonly water (but not restricted to it), to produce high pressure that is transmitted to the mixture inside the bag. The pressure in the vessel increases until a predetermined value is reached. The pressure is held during a defined period of time. Both, the value of the maximum pressure generated and the holding time are selected based on the extraction yield desired from the solid to the liquid and the inactivation level of spoilage and pathogenic microorganisms that is intended. The predetermined pressure is in the range from 200 to 800 MPa and the predetermined time between 1 second and 59 minutes, carrying the process at cold, room or mild temperature.

Therefore, the high pressure applied reduces the time required for the extraction of compounds of interest from plant-based materials, algae or fermentation microorganisms. It simultaneously inactivates spoilage microorganisms and pathogens guaranteeing safety and extending the shelf-life of the processed products.

When the time-limit prefixed to hold the pressure is reached, pressure is released and the pressurizing fluid is evacuated from the vessel. Finally, the mixture is evacuated from the flexible bag through a set of ultraclean ducts, properly sanitized in a previous step.

After processing, the product is hygienically filtered to remove the solid particles used to prepare the beverage but not intended to be in the final product (beverage). The final beverage is the filtered liquid without solid particles, which contains the extracted compounds of interest (nutritional and/or flavoring) from said solid. The final beverage could be furtherly processed, packaged or stored.

Preferably, the final beverage is then stored in an ultraclean tank. From the processed beverage buffer tank, the ready-to-drink beverage, can be packaged or bottled, preferably, but not limited to, in an ultraclean filling station (ESL, Extended Shelf Life).

The liquid or liquids used to prepare the beverage can be, among others, water, infusions (e.g. tea, coffee), juices, alcoholic solutions, and fermented beverages (e.g. beer, kefir, kombucha) or a combination of these (e.g. water and lemon juice).

The solid or solids used to prepare the beverage can be, among others, plant-based materials (e.g. tea leaves, coffee grains, herbs, flowers, hemp, oat, nuts), microorganisms (e.g. bacteria, yeasts or molds) and algae or a combination of these (e.g. tea and mint leaves).

When it is to make an infusion the extraction process is faster by using HPP, while simultaneously, spoilage and pathogenic microorganisms present in the beverage are inactivated.

On the other hand, in the case in which microorganisms from fermentation processes are the solid/s from which extraction is desired, besides getting an enrichment of the beverage with substances from said microorganisms, this method also stops the fermentation process.

### DESCRIPTION OF THE DRAWINGS

To complement the description and to aid towards a better understanding of the characteristics of the invention, in accordance with a preferred example of embodiment thereof, a set of drawings is attached as an integral part of said description wherein, with illustrative and non-limiting character, the following has been represented:
Figure 1.- Shows a scheme of a preferred embodiment of the device to be used to carry out the method of the invention.
Figure 2.- Shows a diagram of a preferred embodiment of the method of the invention.
Figure 3.- Shows a graphical representation of coffee extraction (%) (a), and microbiological quality (log CFU/ml) (b) with the results of Example I.
Figure 4.- Shows a graphical representation of total soluble protein (µg/ml) extracted from oat solutions with results of the Example II.
Figure 5.- Shows a graphical representation of chlorophylls a and b concentration (µg/ml) (a and b, respectively) extracted from microalgae (*Chlorella* genus) solutions with results of Example III.
Figure 6.- Shows a graphical representation of the concentration of total carotenoids (µg/ml) extracted from microalgae (*Chlorella* genus) solutions with results of Example III.

### PREFERRED EMBODIMENT OF THE INVENTION

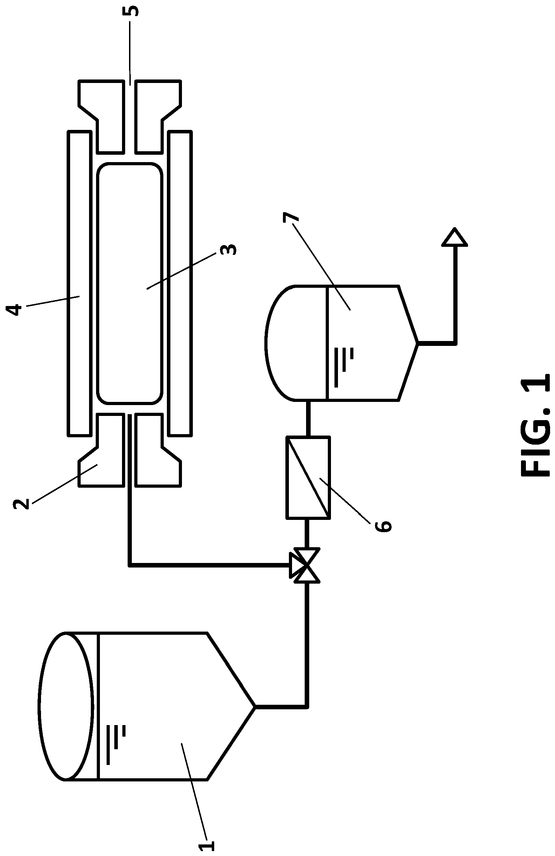

Figure 1 shows a diagram of the preferred device used to carry out the method of the invention.

The device used comprises a unprocessed raw material buffer tank (1), a flexible bag (3), housed in a high-pressure vessel (4), a filter (6) and a processed material buffer tank (7), being connected one to another by means of a set of ultraclean ducts.

The unprocessed raw material buffer tank will contain a mixture of one or several liquids and one or several solids, hereinafter referred as "the mixture".

The flexible bag (3) is capable to withstand the hydrostatic pressure that will be generated around it, inside the vessel (4), where it is placed. The vessel (4) has two plugs (2, 5) for closing it. The flexible bag (3) is connected to one or both of the plugs (2) by means of a hygienic and watertight connection. The mixture is introduced into the flexible bag (3) through a duct inside the plugs (2) and then the HPP process is carried out.

Finally, the processed mixture is filtered by using an ultraclean filter (6), to remove the solid particles, and is transferred to the processed beverage buffer tank (7). Afterwards, the obtained final beverage is ready to be packed or furtherly processed.

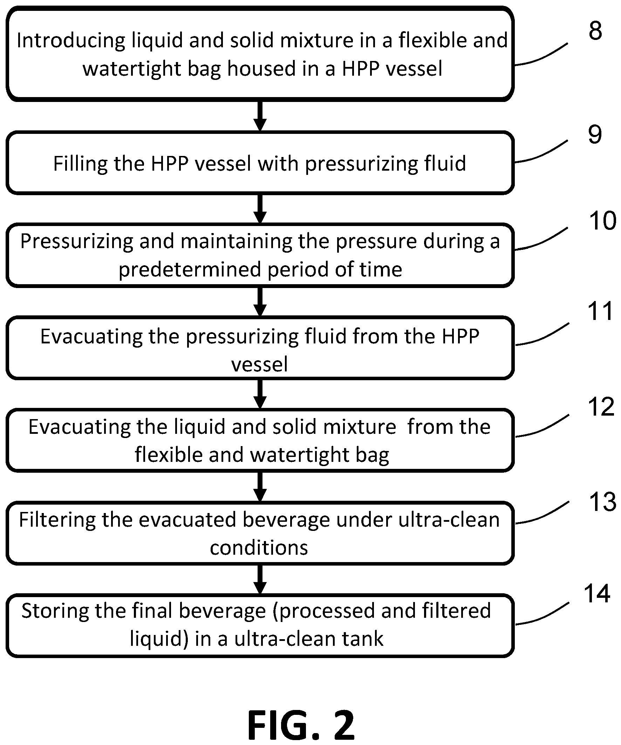

Figure 2 shows a preferable embodiment of the method of the invention. The mixture, contained in the unprocessed raw material buffer tank (1), is introduced (8) by means of a pump through one or both plugs (2) into a flexible bag (3) placed in a high-pressure vessel (4).

Pressurizing fluid, generally water, is pumped into the high-pressure vessel (4), being filled (9), to pressurize the watertight flexible bag (3). The pressure inside the vessel (4) is maintained (10) a predetermined period of time, allowing for the simultaneous extraction and non-thermal pasteurization to occur, then, the pressurizing fluid is evacuated (11) from the vessel (4), thus, reducing the pressure to atmospheric pressure.

Following the high-pressure treatment, the mixture is evacuated (12) from the flexible bag (3) through a hygienic valve and is filtered (13) in a clean way to remove solids in suspension and prevent microbial recontamination. The filtered liquid is stored (14) in an ultraclean processed beverage buffer tank (7). The final beverage can be either packed for commercialization or furtherly processed.

### EXAMPLES

The following examples are provided by way of illustration of embodiments of the invention and are not intended to limit or constrain the invention. As indicated above, applying high pressure to a solid-liquid mixture followed by subsequent filtration can extract compounds of interest from said solid and inactivate microorganisms simultaneously, delivering an enriched beverage with improved microbiological quality.

### Example I

Eight samples of cold-brew coffee, prepared by mixing roasted grinded coffee (Arabica variety) with cold water (5 g/100 ml), were treated as follows:
- Samples #1 to #5. Control samples (no HPP) filtered after 1, 3, 5, 7 and 9 h of standard cold brewing at 4 °C
- Sample #6. Pressurized sample of coffee (600 MPa / 3 min / 4 °C) filtered immediately after HPP
- Sample #7. Pressurized sample of coffee (two consecutive cycles at 600 MPa / 1.5 min / 4 °C) filtered immediately after HPP
- Sample #8. Pressurized sample of coffee (785 MPa / 5 min / 4 °C) filtered immediately after HPP

Samples #6 to #8 were subjected to HPP in a Hiperbaric 525 Bulk unit and hygienically filtered to remove solid coffee particles. The total process time was less than 1 hour (including all HPP steps and filtering).

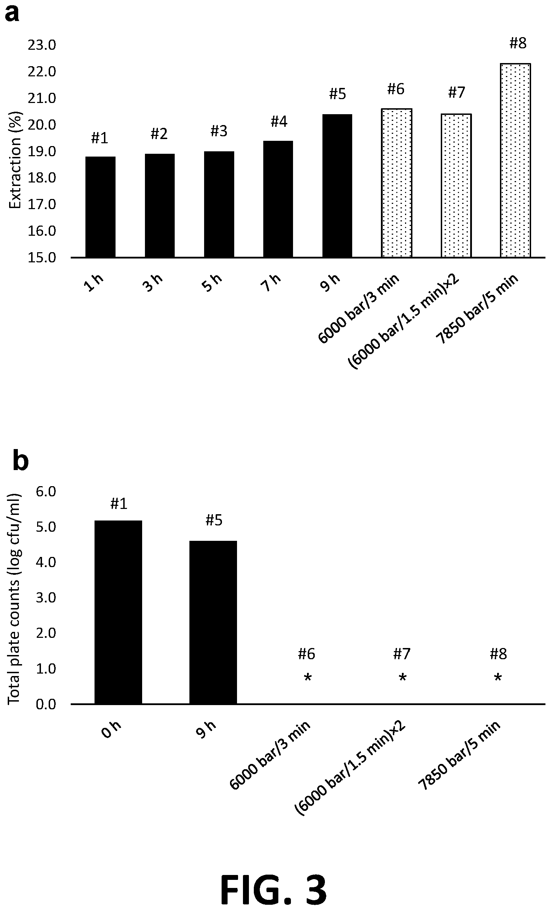

Extraction (%) was determined for every sample (#1 to #8) and total aerobic counts were determined in HPP samples (#6 to #8) and two control samples (#1 and #5). Results are shown in Figure 3a (% extraction) and 3b (total aerobic counts), wherein HPP samples (#6 to #8) show counts below a detection limit of 1 CFU/ml.

As can be seen, extraction (rate and yield) and microbiological quality are improved in HPP samples (#6 to #8). Generally, the extraction is equal or better than in the best control sample, without using HPP, i.e. control sample (#5) filtered after 9 h of standard cold brewing at 4 °C.

### Example II

Six samples of an oat solution, prepared by mixing oats with cold water (15 g/100 ml), were treated as follows:
- Samples #1 to #4. Control samples (no HPP) filtered after 3, 5, 7 and 9 h of standard cold brewing at 4 °C
- Sample #5. Pressurized sample (600 MPa / 2 min / 4 °C) filtered immediately after HPP
- Sample #6. Pressurized sample (two consecutive cycles at 600 MPa / 1.5 min / 4 °C) filtered immediately after HPP

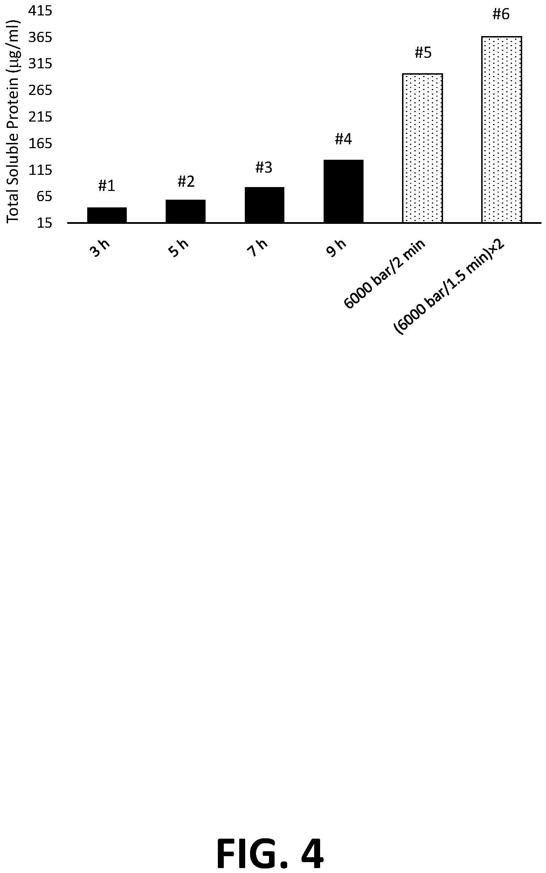

Samples #5 and #6 were subjected to HPP in a Hiperbaric 525 Bulk unit and hygienically filtered to remove solid oats in suspension. Total soluble protein was determined for every sample (#1 to #6). Results are shown in Figure 4.

As can be seen, total soluble protein extraction is improved significantly in HPP samples (#5 and #6). Shelf-life of these samples is extended from a few days to more than one month.

### Example III

Six samples of a microalgae solution (*Chlorella* genus), prepared by mixing powdered microalgae with water (5 g/100 mL), were treated as follows:
- Samples #1 to #4. Control samples (no HPP) filtered after 3, 5, 7 and 9 h of standard cold brewing at 4 °C
- Sample #5. Pressurized sample (600 MPa / 2 min / 4 °C) filtered immediately after HPP
- Sample #6. Pressurized sample (two consecutive cycles at 600 MPa / 1.5 min / 4 °C) filtered immediately after HPP

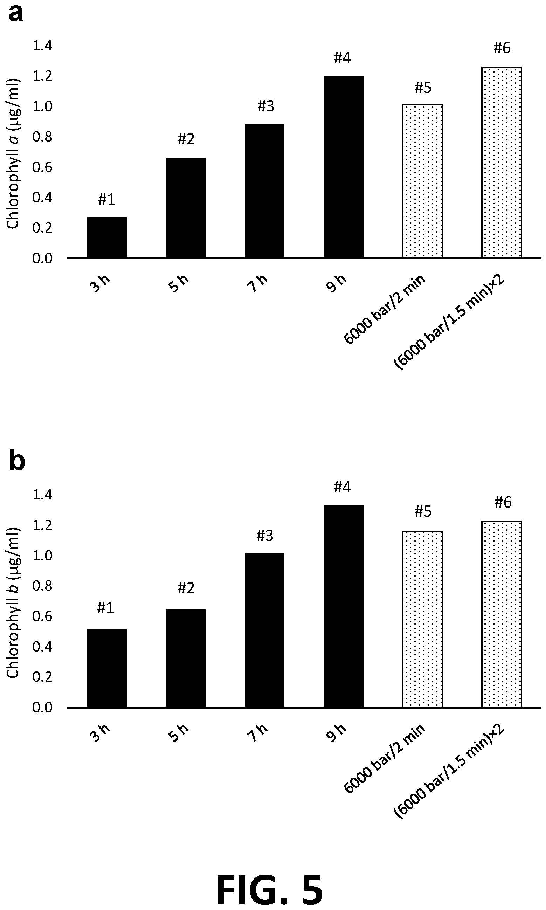

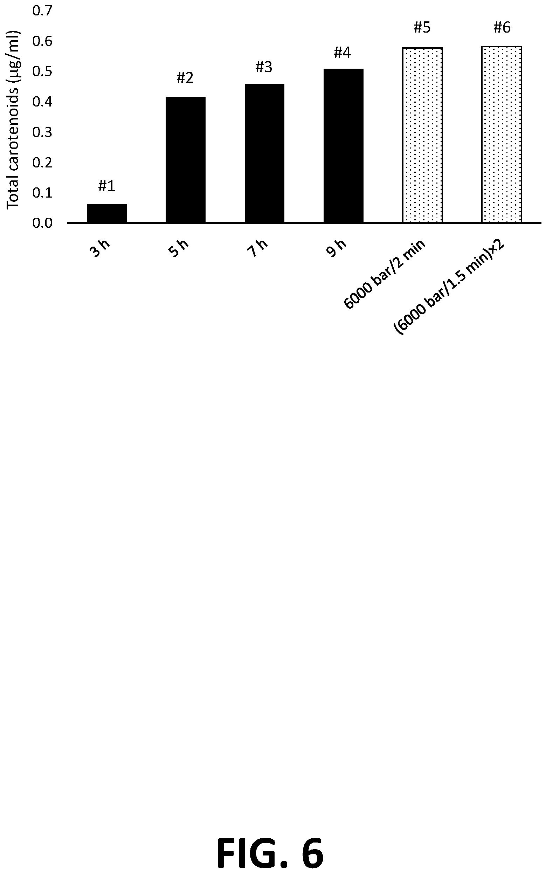

Samples #5 and #6 were subjected to HPP in a Hiperbaric 525 Bulk unit and hygienically filtered to remove microalgae in suspension. Chlorophyll a and b and total carotenoid concentrations were determined for every sample (#1 to #6). Results are shown in Figures 5a and 5b (chlorophylls a and b concentration, respectively) and Figure 6 (total carotenoid concentration).

As can be seen, chlorophyll a and b and total carotenoid extractions are improved and/or enhanced in HPP samples (#5 and #6). Shelf-life of these samples is increased by more than 10 times compared to control samples.

## Claims

1. Method for producing beverages by simultaneous extraction and inactivation of spoilage and pathogenic microorganisms using in-bulk High Pressure Processing (HPP), comprising the steps of:
a) introducing (8) a mixture of one or several liquids and solids, into a watertight flexible bag (3), the bag being housed inside a high-pressure vessel (4),
b) filling (9) the high-pressure vessel with a pressurizing fluid, thus, increasing the pressure inside the vessel wherein the watertight flexible bag prevents direct contact between the pressurizing fluid and the mixture,
c) maintaining (10) a pressure between 200 and 800 MPa inside the vessel during a period of time between 1 s and 59 min, both based on an extraction rate and/or yield desired and an inactivation level of spoilage and/or pathogenic microorganisms that is intended,
d) evacuating the pressurizing fluid (11) from the high-pressure vessel, thus, reducing the pressure inside,
e) evacuating (12) the mixture from the flexible bag, and
f) hygienically filtering (13) the mixture evacuated from the flexible bag, and
g) obtaining a safe and particle-free beverage, with extracted compounds of interest from the solid or solids.

2. Method according to claim 1, where the steps b), c) and d) are repeated one or more times before step e).

3. Method according to claim 1, where the mixture is introduced into the flexible bag from one or several unprocessed raw material buffer tanks.

4. Method according to claim 1, where the solid or the solids of the mixture are microorganisms, plant-based material, algae, or a combination of these.

5. Method according to claim 1, where the liquid or the liquids of the mixture are water, juices, alcoholic solutions, fermented beverages, infused beverages, or a combination of these.

6. Method according to claim 1, where the pressurizing fluid is water, oil, alcohol, or a combination of these.

## Patentansprüche

1. Verfahren zum Herstellen von Getränken durch gleichzeitige Extraktion und Inaktivierung von Abfall und pathogenen Mikroorganismen unter Verwendung von Hochdruckverarbeitung (HPP) in großen Mengen mit den folgenden Schritten:
a) Einleiten (8) eines Gemisches aus einer/einem oder mehreren Flüssigkeiten und Feststoffen in einen wasserdichten flexiblen Beutel (3), wobei der Beutel im Inneren eines Hochdruckbehältnisses (4) untergebracht ist,
b) Befüllen (9) des Hochdruckbehältnisses mit einem Druckbeaufschlagungsfluid, somit Erhöhen des Drucks im Inneren des Behältnisses, wobei der wasserdichte flexible Beutel einen direkten Kontakt zwischen dem Druckbeaufschlagungsfluid und dem Gemisch verhindert,
c) Halten (10) eines Drucks zwischen 200 und 800 MPa im Inneren des Behältnisses während einer Zeitspanne zwischen 1 Sekunde und 59 Minuten, beides auf der Basis einer Extraktionsrate und/oder eines erwünschten Ertrages und eines Inaktivierungsniveaus von Abfall und/oder pathogenen Mikroorganismen, die/der beabsichtigt ist,
d) Entleeren des Druckbeaufschlagungsfluides (11) aus dem Hochdruckbehältnis, womit der Druck im Inneren reduziert wird,
e) Entleeren (12) des Gemisches aus dem flexiblen Beutel, und
f) hygienisches Filtern (13) des Gemisches, das aus dem flexiblen Beutel entleert worden ist, und
g) Erhalten eines sicheren und partikelfreien Getränks, wobei die Stoffe von Interesse aus dem Feststoff oder den Feststoffen extrahiert sind.

2. Verfahren gemäß Anspruch 1, wobei die Schritte b), c) und d) ein- oder mehrmals vor Schritt e) wiederholt werden.

3. Verfahren gemäß Anspruch 1, wobei das Gemisch in den flexiblen Beutel aus einem oder mehreren Puffertanks für unbehandeltes Rohmaterial eingeleitet wird.

4. Verfahren gemäß Anspruch 1, wobei der Feststoff oder die Feststoffe des Gemisches Mikroorganismen, Material auf Pflanzenbasis, Algen oder eine Kombination aus diesen sind.

5. Verfahren gemäß Anspruch 1, wobei die Flüssigkeit oder die Flüssigkeiten des Gemisches Wasser, Säfte, alkoholische Lösungen, fermentierte Getränke, aufgebrühte Getränke oder eine Kombination aus diesen sind.

6. Verfahren gemäß Anspruch 1, wobei das Druckbeaufschlagungsfluid Wasser, Öl, Alkohol oder eine Kombination aus diesen ist.

## Revendications

1. Procédé de production de boissons par extraction et inactivation simultanée de microorganismes pathogènes et d'altération en utilisant un traitement en vrac par hautes pressions (HPP), comprenant les étapes suivantes :
a) l'introduction (8) d'un mélange d'un ou plusieurs liquides et solides, dans un sac flexible étanche (3), le sac étant logé à l'intérieur d'un récipient haute pression (4),
b) le remplissage (9) du récipient haute pression avec un fluide pressurisant, ainsi, l'augmentation de la pression à l'intérieur du récipient dans lequel le sac flexible étanche prévient le contact direct entre le fluide pressurisant et le mélange,
c) le maintien (10) d'une pression entre 200 et 800 MPa à l'intérieur du récipient durant une période de temps entre 1 s et 59 min, à la fois sur la base d'une vitesse d'extraction et/ou sur un rendement souhaité et un niveau d'inactivation de microorganismes pathogènes et/ou d'altération prévu,
d) l'évacuation du fluide pressurisant (11) du récipient haute pression, ainsi, la réduction de la pression à l'intérieur de celui-ci,
e) l'évacuation (12) du mélange du sac flexible, et
f) le filtrage hygiénique (13) du mélange évacué du sac flexible, et
g) l'obtention d'une boisson sûre et sans particules, avec des composés d'intérêt extraits à partir du solide ou des solides.

2. Procédé selon la revendication 1, dans lequel les étapes b), c) et d) sont répétées une ou plusieurs fois avant l'étape e).

3. Procédé selon la revendication 1, dans lequel le mélange est introduit dans le sac flexible à partir d'un ou plusieurs réservoirs tampons pour matières premières non transformées.

4. Procédé selon la revendication 1, dans lequel le solide ou les solides du mélange sont des microorganismes, des matériaux à base de plantes, algues, ou une combinaison de ceux-ci.

5. Procédé selon la revendication 1, dans lequel le liquide ou les liquides du mélange sont de l'eau, des jus, des solutions alcooliques, des boissons fermentées, des boissons infusées, ou une combinaison de ceux-ci.

6. Procédé selon la revendication 1, dans lequel le fluide pressurisant est de l'eau, de l'huile, de l'alcool, ou une combinaison de ceux-ci.
